# EUROPEAN PATENT APPLICATION

(11) **EP 4 571 301 A1**
(43) Date of publication of application: **18.06.2025**
(21) Application number: 23944892.1
(22) Date of filing: 03.11.2023
(51) Int. Cl.: G01N 29/06

(54) **ULTRASONIC TESTING METHOD AND SYSTEM FOR RESTRICTED STRUCTURE**

(71) Applicant: Suzhou Nuclear Power Research Institute Co., Ltd., Suzhou, Jiangsu 215004 (CN)
(72) Inventor: LIU, Xiaorui, Suzhou, Jiangsu 215004 (CN); PENG, Zhizhen, Suzhou, Jiangsu 215004 (CN); XU, Ting, Suzhou, Jiangsu 215004 (CN); XU, Ning, Suzhou, Jiangsu 215004 (CN); WANG, Jin, Suzhou, Jiangsu 215004 (CN)
(74) Representative: Westphal, Mussgnug & Partner, Patentanwälte mbB
(86) International application number: PCT/CN2023/129580
(87) International publication number: WO 2025/010886

(57) **Abstract**

An ultrasonic testing method and system for a restricted structure, the method comprises the following steps: receiving an ultrasonic control signal, and determining the waveform of a first ultrasonic wave, wherein the waveform of the first ultrasonic wave may be a diverging wave or a converging wave (S1); according to the ultrasonic control signal, transmitting the first ultrasonic wave having a corresponding waveform to a target imaging area of a restricted structure (S2); receiving an echo of the first ultrasonic wave, so as to obtain echo data of the first ultrasonic wave (S3); and according to the echo data of the first ultrasonic wave, obtaining an ultrasonic image of the target imaging area, so as to detect a defect of the restricted structure according to the ultrasonic image (S4). According to the control of the ultrasonic control signal, when the first ultrasonic wave is a diverging wave, the coverage area of the sound beam can be expanded, and the testing blind area is reduced; and when the first ultrasonic wave is a converging wave, micron-scale high-resolution imaging can be achieved.

## Description

### FIELD

The invention relates to the field of ultrasonic testing, particularly to an ultrasonic testing method and system for a restricted structure.

### BACKGROUND

Currently, for the internal defects testing of complex and restricted structure, A-Scan ultrasonic testing method or phased array ultrasonic testing method based on sectorial scanning is generally adopted.

Among them, when using the A-Scan ultrasonic testing method, it is difficult to make an intuitive judgment on the testing signal through the A-Scan display image. In addition, the refraction angle of the probe used for each test is fixed, and its testing angle is single. Because of the diverse and complex structure of the restricted structure, the moving space of the ultrasonic probe is limited, and it is impossible to ensure that the ultrasonic wave completely covers the testing area, and there often exists a large testing blind area. For example, according to the testing standard NB/T 47013.3, the width of the probe moving area should be greater than or equal to 1.25P when the single reflection method is used for testing, and the width of the probe moving area should be greater than or equal to 0.75P when the direct reflection method is used for testing, where P=2Kt, t is the thickness of the workpiece to be detected, and K is the tangent value of the probe refraction angle. Due to the limitation of the restricted structure, the width of the probe moving area cannot meet the testing requirements.

The imaging of the phased array ultrasonic testing method based on sectorial scanning is based on the delay-and-sum (DAS) algorithm. Because of the limited focus area or even no focus of the DAS algorithm, its testing resolution is limited, the imaging frame rate is low and there are fewer imaging points.

### SUMMARY

The technical problem to be solved by the invention is to provide an ultrasonic testing method and system for a restricted structure.

The technical scheme adopted by the invention to solve the technical problems is as follows: providing an ultrasonic testing method for a restricted structure, which comprises the following steps:
Receiving an ultrasonic control signal, and determining a waveform of a first ultrasonic wave, wherein the waveform of the first ultrasonic wave comprises a diverging wave or a converging wave;
Transmitting a first ultrasonic wave with a corresponding waveform to a target imaging area of a restricted structure according to the ultrasonic control signal;
Receiving an echo of the first ultrasonic wave to obtain echo data of the first ultrasonic wave;
Obtaining an ultrasonic image of the target imaging area according to the echo data of the first ultrasonic wave, and detecting the defects of the restricted structure according to the ultrasonic image.

Preferably, transmitting the first ultrasonic wave and receiving the echo of the first ultrasonic wave through the same probe, wherein the probe has M array elements, and M is an integer greater than 0; or,
Transmitting the first ultrasonic wave through a first probe and receiving the echo of the first ultrasonic wave through a second probe, wherein both the first probe and the second probe have M array elements.

Preferably, the M array elements are arranged in a uniform array element arrangement or a non-uniform array element arrangement.

Preferably, the array element is a transmitting array element when the first ultrasonic wave is transmitted, and the first ultrasonic wave comprises N first sub-ultrasonic waves, where N is an integer and 0 <N≤M;
After the step of receiving the ultrasonic control signal, it further comprises:
Determining the number N of the first sub-ultrasonic waves in the first ultrasonic wave according to the ultrasonic control signal;
The step of transmitting the first ultrasonic wave with a corresponding waveform to the target imaging area of a restricted structure according to the ultrasonic control signal comprises:
   Transmitting the N first sub-ultrasonic waves by exciting N transmitting array elements.
   Preferably, after the step of receiving the ultrasonic control signal, it further comprises:
      Determining a transmitting delay law according to the ultrasonic control signal;
      The step of transmitting the N first sub-ultrasonic waves by exciting N transmitting array elements comprises:
         Exciting N transmitting array elements according to the transmitting delay law to transmit the N first sub-ultrasonic waves.
         Preferably, when the echo of the first ultrasonic wave is received, the array element is a receiving array element, and the echo of the first ultrasonic wave comprises N echoes of the first sub-ultrasonic waves;
         The step of receiving the echo of the first ultrasonic wave to obtain the echo data of the first ultrasonic wave comprises:
            Receiving the echo of each of the first sub-ultrasonic waves through N receiving array elements to obtain the echo data of N×N first sub-ultrasonic waves;
            Superimposing the echo data of the N×N first sub-ultrasonic waves to obtain the echo data of the first ultrasonic wave.

Preferably, the step of receiving the ultrasonic control signal further comprises:
Receiving an ultrasonic control signal and determining waveforms of a plurality of first ultrasonic waves; wherein the number of the first ultrasonic waves conforms to a preset first threshold, or the angular steps of the deflection angles of all the first ultrasonic waves conform to a preset second threshold;
The step of transmitting the first ultrasonic wave with a corresponding waveform to the target imaging area of a restricted structure according to the ultrasonic control signal comprises:
   Transmitting a plurality of the first ultrasonic waves with corresponding waveforms to the target imaging area;
   The step of obtaining an ultrasonic image of the target imaging area according to the echo data of the first ultrasonic wave comprises:
      Compounding echo data of all the first ultrasonic waves to obtain an ultrasonic image of the target imaging area; or,
      When the number of the first ultrasonic waves is one, the step of obtaining the ultrasonic image of the target imaging area according to the echo data of the first ultrasonic waves comprises:
         According to the echo data of the first ultrasonic wave, an ultrasonic image of the first ultrasonic wave is obtained as the ultrasonic image of the target imaging area.

Preferably, the waveform of the first ultrasonic wave further comprises a plane wave; or, the echo waveform of the first ultrasonic wave is a converging wave, a plane wave or a diverging wave.

Preferably, the step of detecting the defects of the restricted structure according to the ultrasonic image comprises:
Analyzing the ultrasonic image of the target imaging area by adopting a time domain analysis method and/or a frequency domain analysis method to detect the defects of the restricted structure.

The invention also provides an ultrasonic testing system for a restricted structure, comprising:
A control signal acquisition module, which is used to receive an ultrasonic control signal and determine a waveform of a first ultrasonic wave, wherein the waveform of the first ultrasonic wave comprises a diverging wave or a converging wave;
A transmitting module, which to transmit a first ultrasonic wave with a corresponding waveform to a target imaging area of a restricted structure according to the ultrasonic control signal;
A receiving module, which is used to receive an echo of the first ultrasonic wave and obtain the echo data of the first ultrasonic wave;
An imaging processing module, which is used to obtain an ultrasonic image of the target imaging area according to the echo data of the first ultrasonic wave, to detect the defects of the restricted structure according to the ultrasonic image.

The ultrasonic testing method and system for a restricted structure have the following beneficial effects: according to the control of the ultrasonic control signal, the first ultrasonic wave with a corresponding waveform is transmitted to detect the restricted structure, and when the first ultrasonic wave is a diverging wave, the coverage area of the sound beam can be expanded, and the testing blind area can be reduced; when the first ultrasonic wave is a converging wave, micron-scale high-resolution imaging can be achieved.

### BRIEF DESCRIPTION OF THE DRAWINGS

The invention will be further described with reference to the attached drawings and embodiments, in which:
FIG. 1 is a schematic diagram of probe array arrangement according to an embodiment of the present invention;
FIG. 2 is a flow chart of an embodiment of an ultrasonic testing method of a restricted structure of the present invention;
FIG. 3 is a schematic diagram of a deflection angle of an embodiment of an ultrasonic testing method of a restricted structure of the present invention;
FIG. 4 is a structural block diagram of an embodiment of an ultrasonic testing system of a restricted structure according to the present invention.

### DETAILED DESCRIPTION

To have a clearer understanding of the technical features, purposes, and effects of the present invention, specific embodiments of the present invention will now be described in detail with reference to the attached drawings. It should be noted that the terms "first" and "second" are only for the convenience of describing the technical scheme, and cannot be understood as indicating or implying relative importance or implicitly indicating the number of indicated technical features. Therefore, features defined with "first" and "second" can explicitly or implicitly include one or more of these features. For those of ordinary skill in the art, the specific meanings of the above terms in the present invention can be understood according to specific situations.

In one embodiment of the invention, an ultrasonic testing method of the restricted structures is provided, which can be used for detecting defects of the restricted structures. The geometric shape or structure of the restricted structure is complex and diverse, and the moving range of the probe is limited, such as fillet weld.

In this embodiment, transmitting the first ultrasonic wave and receiving the echo of the first ultrasonic wave through the same probe, and the probe has M array elements, where M is an integer greater than 0; or, transmitting the first ultrasonic wave through a first probe and receiving the echo of the first ultrasonic wave through a second probe, and both the first probe and the second probe have M array elements. A probe is a device that transmits and receives ultrasonic waves during ultrasonic testing. The same probe may be used in this embodiment in a self-transmitting and self-receiving manner. In addition, if the probes can be placed on both sides of the target imaging area of the restricted structure, and the reference block is processed according to the material and thickness of the restricted structure and the width of the movable area of the probe so that the reference block is provided with a side drilled hole and a notch, when testing on a test block using one probe to transmit and the other to receive confirms that the method of interference using scattering wave can meet the relevant requirements for the testing of the restricted structure, the means of a pair of probes with one transmitting and one receiving can be selected, that is, the first probe is the transmitting probe and the second probe is the receiving probe.

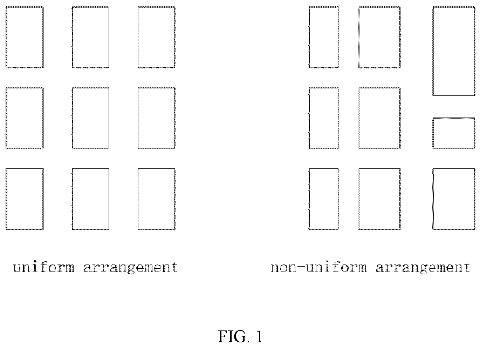

Further, referring to FIG. 1, M array elements are arranged in a uniform array element arrangement or a non-uniform array element arrangement. The piezoelectric crystal located at the head of the probe is cut into several parts on average, and each part is the smallest unit that can independently transmit and receive ultrasonic waves, which is called an array element. Generally, the probe with a uniform array element arrangement can be selected, and the probe with a non-uniform array element arrangement can also be selected according to the testing needs. The influence of grating lobes and side lobes can be suppressed by exciting the non-uniform array element arrangement to generate ultrasonic waves for testing. Non-uniform array element arrangements include but are not limited to different array element spacing, different array element length, different array element width, or irregular array element arrangement.

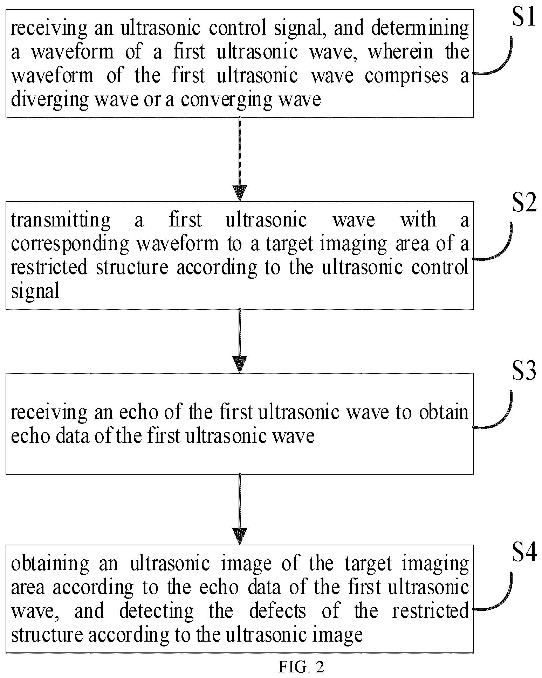

As shown in FIG. 2, the ultrasonic testing method for the restricted structure of this embodiment includes the following steps:
S1, receiving an ultrasonic control signal and determining the waveform of a first ultrasonic wave, the waveform of the first ultrasonic wave includes a diverging wave or a converging wave.

Specifically, the virtual focus of the diverging wave is located behind the probe. Because of its diverging waveform, the testing area can be covered by one transmitting, which overcomes the influence of frame rate in traditional phased array ultrasonic imaging and synthetic aperture transmitting imaging, and there is no need to balance between the frame rate and the target imaging area. In the narrow area of the testing surface, a larger sound beam coverage area can be realized, to reduce the testing blind area, so it has better imaging quality. The virtual focus of the converging wave is located in front of the probe, which can achieve micron-scale high-resolution imaging of specific areas by means of converging waves and can also be applied to some scenes with narrow environments. Further, according to the testing requirements, the waveform of the first ultrasonic wave can also be a plane wave, and the whole wavefront of the first ultrasonic wave is a plane. In general, only plane waves can be used, and for areas with limited testing surface space, diverging wave mode is adopted to expand the actual testing range; at the same time, the means of converging waves are used to improve the imaging effect for key focus areas. The converging waves are similar to focusing ultrasonic waves on a tiny area. In the case of a fixed number of sampling points, high-resolution imaging of a specific area can be achieved because ultrasonic waves are focused on a tiny area and with high energy.

One first ultrasonic wave refers to the ultrasonic wave transmitted by exciting a part or all of the array elements of the probe in one transmitting. One first ultrasonic wave includes a plurality of first sub-ultrasonic waves (the number is N, where N is an integer and 0<N≤M). Different first sub-ultrasonic waves can be transmitted by means of delayed excitation to form first ultrasonic waves with different waveforms, thus meeting different testing needs. Among them, the number N of the first sub-ultrasonic waves can be determined according to the prior knowledge. Generally, the number of the first sub-ultrasonic waves included in a diverging wave is not less than 128, and the number of the first sub-ultrasonic waves included in a converging wave is not less than 32. Of course, the number of the first sub-ultrasonic waves can be any other value according to the needs of the actual testing and imaging.

Optionally, after receiving the ultrasonic control signal, determining the number N of the first sub-ultrasonic waves in the first ultrasonic wave according to the ultrasonic control signal, so that the number of array elements to be excited in one transmitting can be determined; the full array elements are excited when N=M, and the partial array elements are excited when N<M, the array elements to be excited can be determined according to the ultrasonic control signal, so that N first sub-ultrasonic waves can be transmitted by exciting N transmitting array elements. Further, the transmitting delay law is determined according to the ultrasonic control signal, and according to the transmitting delay law, the generation of the different first sub-ultrasonic waves are respectively delayed and excited to form the first ultrasonic waves with specific waveforms. It can be understood that by changing the transmitting delay of different first sub-ultrasonic waves, different virtual plane, concave surface, or convex surface structure waveforms can be formed, including but not limited to different curvature radii, different distances of array elements from concave surface or convex surface structures, and irregular concave surface or convex surface structures.

Further, the ultrasonic control signal can be input by the user or preset. For example, the user can set the array elements to be excited according to the needs of the user and input the transmitting delay law corresponding to each array element as the ultrasonic control signal, or the array elements and the transmitting delay law can be set in advance and then detected according to the ultrasonic control signal. For another example, information such as waveform, imaging point position, virtual focus position, transmitting array element, deflection angle, etc. are input or preset by users as ultrasonic control signals, and the transmitting delay law is obtained after calculation operations according to preset transmitting delay calculation formulas corresponding to different waveforms. The transmitting delay calculation formulas can refer to the existing technology.

S2, according to the ultrasonic control signal, transmitting the first ultrasonic waves with corresponding waveforms to a target imaging area of the restricted structure.

Specifically, when the first ultrasonic wave is transmitted, the array elements on the probe are transmitting array elements. After determining the number N of the first sub-ultrasonic waves in one first ultrasonic wave according to the ultrasonic control signal, the N transmitting array elements to be excited are selected, and the transmitting delay laws of these transmitting array elements are determined. Then, according to the transmitting delay laws, the N transmitting array elements are respectively excited to transmit the N first sub-ultrasonic waves, that is, one transmitting is achieved and one first ultrasonic wave is transmitted to the target imaging area.

S3, receiving an echo of the first ultrasonic wave, to obtain the echo data of the first ultrasonic wave.

Specifically, when receiving the echo of the first ultrasonic wave, the array element on the probe is the receiving array element, and the echo of the first ultrasonic wave includes the echoes of N first sub-ultrasonic waves. Step S3 includes: receiving the echo of each of the first sub-ultrasonic waves through N receiving array elements to obtain the echo data of N×N first sub-ultrasonic waves; superimposing the echo data of N×N first sub-ultrasonic waves to obtain the echo data of the first ultrasonic wave.

In the receiving mode, partial array elements or full array elements are used for parallel receiving corresponding to the transmitting mode. When the same probe is used in this embodiment in a self-transmitting and self-receiving manner, in the receiving mode, each array element receives not only the echo of the first sub-ultrasonic wave transmitted by this array element, but also the echo of the first sub-ultrasonic wave excited by other array elements, so when receiving the echo of one first ultrasonic wave is achieved, the echo data of N×N first sub-ultrasonic waves can be obtained; when using the means of a pair of probes with one transmitting and one receiving, the receiving array elements on the receiving probe are determined according to the corresponding transmitting array elements of the transmitting probe, and these receiving array elements all receive the echo of each of the first sub-ultrasonic waves so that the echo data of N×N first sub-ultrasonic waves can be obtained.

The target imaging area is divided into imaging points with a certain resolution. For any imaging point in the target imaging area, the corresponding delay adjustment is carried out from the echo data of N×N first ultrasonic waves corresponding to N transmitting array elements and N receiving array elements. The synchronized echo data is superimposed and calculated to obtain the value of the imaging point. In this embodiment, the total-focusing imaging algorithm is used to perform total-focusing imaging on the target imaging area. Compared with the DAS algorithm, the total-focusing imaging algorithm has higher testing sensitivity, more imaging points, a relatively higher imaging frame rate, a certain fault tolerance rate for data, and higher imaging quality.

S4, according to the echo data of the first ultrasonic wave, obtaining an ultrasonic image of the target imaging area, to detect the defects of the restricted structure according to the ultrasonic image.

Specifically, the ultrasonic image of the first ultrasonic wave is obtained according to the echo data of the first ultrasonic wave as the ultrasonic image of the target imaging area. After transmitting once and receiving once, all the echo signals at the same depth correspond to the real imaging point, and one ultrasonic image of the first ultrasonic wave can be formed as the ultrasonic image of the target imaging area, thus completing the one testing. Further, the ultrasonic image of the target imaging area is analyzed by using the time domain analysis method and/or the frequency domain analysis method to detect the defects of the restricted structures. In the final imaging, the time domain analysis methods such as filtering and statistical feature calculation can be used to analysis and detect the defects of restricted structures, or the frequency domain analysis methods such as Fourier transform and wavelet analysis can also be used. According to the need, two methods can also be used for analysis at the same time, and the frequency domain analysis method is used as an auxiliary means to improve the testing and identification ability of surface and near-surface micro-defects.

In an alternative embodiment, the waveform of the echo of the first ultrasonic wave is a converging wave, a plane wave, or a diverging wave. When the restricted structures are suitable to be tested by means of a pair of probes with one transmitting and one receiving, the echoes of the first ultrasonic waves of different waveforms can be received by adjusting the receiving delay of the receiving probes, so that different transmitting and receiving modes can be used, such as plane wave transmitting and receiving, plane wave transmitting and diverging wave receiving, plane wave transmitting and plane wave receiving, converging wave transmitting and plane wave receiving, converging wave transmitting and diverging wave receiving, converging wave transmitting and converging wave receiving, diverging wave transmitting and diverging wave receiving, diverging wave transmitting and converging wave receiving, diverging wave transmitting and plane wave receiving, to meet different testing and imaging requirements. After receiving the echo, based on the appropriate imaging modal (such as lateral wave, direct wave, once simple scattering, multiple complex scattering, once scattering with wave mode conversion or multiple complex scattering with wave mode conversion), all the received echo data are superimposed, and then the ultrasonic image of the target imaging area is obtained, to evaluate the size of micro-defects by measuring the time difference of scattering waves during this period of time caused by micro-defects, that is, scattering wave interference interferometry, SWI. Furthermore, the defect length can be measured by the absolute sensitivity method and half-wave height method, the defect height can be measured by the half-wave height method or endpoint diffraction method, and the position and depth of micro-defects can be measured based on the ultrasonic image of the target imaging area.

In another embodiment of an ultrasonic testing method for the restricted structure:
Step S1 includes receiving an ultrasonic control signal and determining waveforms of a plurality of first ultrasonic waves; the number of the first ultrasonic waves conforms to a preset first threshold, or the angular steps of the deflection angles of all the first ultrasonic waves conform to a preset second threshold.
Step S2 includes transmitting a plurality of first ultrasonic waves with corresponding waveforms to the target imaging area.
Step S3 includes receiving the echo of each of the first ultrasonic waves respectively, and obtaining the echo data of each of the first ultrasonic waves.
Step S4 includes compounding the echo data of all the first ultrasonic waves to obtain an ultrasonic image of the target imaging area.

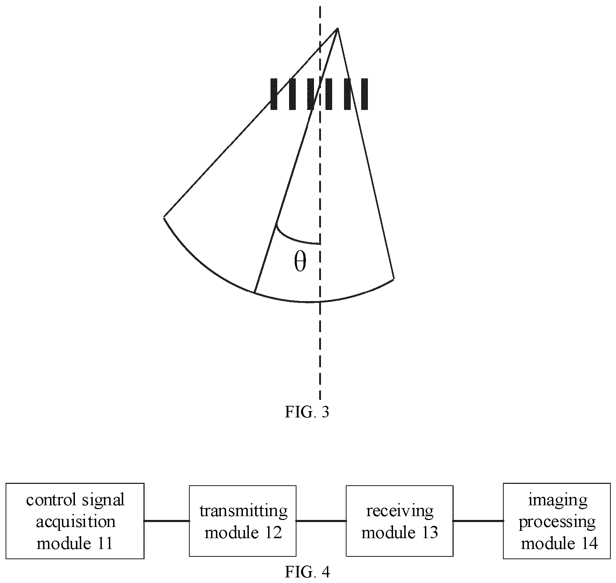

Specifically, in this embodiment, for the same target imaging area, a multi-angle composite imaging method of multiple transmitting and multiple receiving is used to complete one testing, each of the first ultrasonic waves has a different deflection angle and consistent waveform. Referring to FIG. 3, taking diverging waves as an example, the deflection angle θ of the first ultrasonic wave refers to the deflection angle of the refracted wave when the first ultrasonic wave enters the restricted structure, and the dotted line indicates that the deflection angle is 0° . According to the testing needs, an angle interval is determined in advance, and then a plurality of angles are determined as the deflection angles of each transmitting, respectively. To ensure the quality of composite imaging, the following conditions need to be met: the number of first ultrasonic waves should meet the preset first threshold, that is, the number of deflection angles should meet the preset first threshold; or, the angular steps of the deflection angles of all the first ultrasonic waves conform to the preset second threshold. Optionally, when the waveform of the first ultrasonic wave is a diverging wave, the number of angles used in multi-angle composite imaging is not less than 20; when the waveform of the first ultrasonic wave is a converging wave, the angular step used in multi-angle composite imaging is not greater than 1° . For example, the angle range of imaging is 50° -60° , and with each angular step of 1°, and the deflection angles of the first ultrasonic wave are 50° , 51° , 52° , 53 ° ... 60° , respectively.

Receiving the ultrasonic control signal set by the user or preset, determining waveform, imaging point position, virtual focus position, transmitting array element, deflection angle, and other information, and calculating based on preset transmitting delay calculation formulas corresponding to different waveforms to obtain the transmitting delay laws of the first ultrasonic wave at each deflection angle. According to the transmitting delay law, a plurality of first ultrasonic waves are transmitted to the target imaging area, all or part of the imaging points are traversed, and the echo data of N×N first sub-ultrasonic waves of each of the first ultrasonic waves are received respectively, and the echo data of each of the first ultrasonic waves is obtained by beam synthesis through a total-focusing imaging algorithm. For example, diverging waves with different deflection angles are transmitted 20 times in one testing, and the echoes are received in turn, 20 echoes data are obtained after beam synthesis, and then 20 echoes data are superimposed based on the weight of each preset deflection angle to obtain the final imaging point value, to realize composite imaging, and the echoes obtained by transmitting from different angles can be coherently composited to obtain a higher quality image. In another embodiment, the transmitting delay law can also be determined in advance before testing, and the transmitting delay law can be input by the user as an ultrasonic control signal during testing, and then ultrasonic waves with different deflection angles can be transmitted according to the ultrasonic control signal.

According to the invention, a diverging wave and a converging wave are introduced in the field of industrial testing, and multi-angle composite imaging is performed so that the defect testing efficiency of the restricted structure is improved.

The invention also discloses an embodiment of an ultrasonic testing system of the restricted structure, which can be used for realizing an ultrasonic testing method of the restricted structure in the present invention. As shown in FIG. 4, the ultrasonic testing system includes:
A control signal acquisition module 11, which is used to receive an ultrasonic control signal and determine a waveform of a first ultrasonic wave, the waveform of the first ultrasonic wave includes a diverging wave or a converging wave. Optionally, the waveform of the first ultrasonic wave further includes a plane wave.

Specifically, the ultrasonic control signal of the control signal acquisition module 11 can be input by the user or preset in the control signal acquisition module 11. For example, the user can set the array elements to be excited according to the need and input the transmitting delay law corresponding to each array element as the ultrasonic control signal, or the array elements and the transmitting delay law can be set in advance and then detected according to the ultrasonic control signal. For another example, information such as waveform, imaging point position, virtual focus position, transmitting array element, deflection angle, etc. are input or preset by users as ultrasonic control signals, and the transmitting delay law is obtained after calculation operations according to transmitting delay calculation formulas corresponding to different preset waveforms.

A transmitting module 12 is used to transmit the first ultrasonic wave with a corresponding waveform to the target imaging area of the restricted structure according to the ultrasonic control signal.

Specifically, the transmitting module 12 determines the number N of the first sub-ultrasonic waves in one first ultrasonic wave according to the ultrasonic control signal, selects the N transmitting array elements to be excited, and determines the transmitting delay laws of these transmitting array elements, and then respectively excites the N transmitting array elements according to the transmitting delay laws to transmit the N first sub-ultrasonic waves, that is, one transmitting is completed and one first ultrasonic wave is transmitted to the target imaging area.

A receiving module 13, which is used to receive the echo of the first ultrasonic wave and obtain the echo data of the first ultrasonic wave.

Specifically, the receiving module 13 adopts the total-focusing imaging algorithm, receives the echo data of N×N first sub-ultrasonic waves through the receiving array element, makes corresponding delay adjustment, and the synchronized echo data is superimposed and calculated to obtain the value of the imaging point.

An imaging processing module 14, which is used to obtain an ultrasonic image of the target imaging area according to the echo data of the first ultrasonic wave, to detect the defects of the restricted structure according to the ultrasonic image.

Specifically, the imaging processing module 14 obtains the ultrasonic image of the first ultrasonic wave according to the echo data of the first ultrasonic wave as the ultrasonic image of the target imaging area. After transmitting once and receiving once, all the echo signals at the same depth correspond to the real imaging point, and an ultrasonic image of the first ultrasonic wave can be formed as the ultrasonic image of the target imaging area, thus completing one testing. Further, the ultrasonic image of the target imaging area is analyzed by time domain analysis method and/or frequency domain analysis method to detect the defects of the restricted structure. In the final imaging, time domain analysis methods such as filtering and statistical feature calculation can be used to analysis, to detect the defects of restricted structure, or frequency domain analysis methods such as Fourier transform and wavelet analysis can also be used. According to the need, two methods can also be used for analysis at the same time, and the frequency domain analysis method is used as an auxiliary means to improve the testing and identification ability of surface and near-surface micro-defects.

In an alternative embodiment, the waveform of the echo of the first ultrasonic wave received by the receiving module 13 is a converging wave, a plane wave, or a diverging wave. The receiving module 13 can receive the echoes of the first ultrasonic waves of different waveforms by adjusting the receiving delay of the receiving probe, using different transmitting and receiving modes, plane wave transmitting and receiving, plane wave transmitting and diverging wave receiving, plane wave transmitting and plane wave receiving, converging wave transmitting and plane wave receiving, converging wave transmitting and diverging wave receiving, converging wave transmitting and converging wave receiving, diverging wave transmitting and diverging wave receiving, diverging wave transmitting and converging wave receiving, diverging wave transmitting and plane wave receiving, to meet different testing and imaging requirements. The receiving delay is set by pre-calculation. After obtaining the echo data, the imaging processing module 14 superimposes all the received echo data based on the appropriate imaging modal ( such as lateral wave, direct wave, once simple scattering, multiple complex scattering, once scattering with wave mode conversion or multiple complex scattering with wave mode conversion) to obtain an ultrasonic image of the target imaging area, to evaluate the size of micro-defects by measuring the time difference of scattering waves during this period of time caused by micro-defects.

In another alternative embodiment, the control signal acquisition module 11 is further configured to receive ultrasonic control signals and determine waveforms of a plurality of first ultrasonic waves. Specifically, the control signal acquisition module 11 receives the ultrasonic control signal set by the user or preset, determines the waveform, the imaging point position, the virtual focus position, the transmitting array element, the deflection angle, and other information, and obtains the transmitting delay law of the first ultrasonic wave at each deflection angle after performing a calculation based on the transmitting delay calculation formulas corresponding to different preset waveforms. In another embodiment, the transmitting delay law can be determined in advance before testing, and the control signal acquisition module 11 can acquire the transmitting delay law input by the user as the ultrasonic control signal during testing, and then transmit ultrasonic waves with different deflection angles according to the ultrasonic control signal.

The transmitting module 12 is also used to transmit a plurality of first ultrasonic waves with corresponding waveforms to the target imaging area. According to the transmitting delay law, a plurality of first ultrasonic waves are transmitted to the target imaging area, and all or part of the imaging points are traversed.

The receiving module 13 is also used to receive the echo of each of the first ultrasonic waves respectively and obtain the echo data of each of the first ultrasonic waves. The echo data of N×N first sub-ultrasonic waves of each of the first ultrasonic waves are received respectively, and the echo data of each of the first ultrasonic waves is obtained by beam synthesis through a total-focusing imaging algorithm.

The imaging processing module 14 is also used to compound the echo data of all the first ultrasonic waves to obtain an ultrasonic image of the target imaging area. The imaging processing module 14 superimposes the 20 echo data obtained after beam synthesis based on the weight of each preset deflection angle to obtain the final imaging point value to realize composite imaging, and coherently composites the echoes obtained by transmitting from different angles to obtain a higher quality image.

The invention also provides a computer device, which includes a memory and a processor, a computer program executable by the processor is stored in the memory, and when the processor executes the computer program, the steps of the ultrasonic testing method of restricted structures of any of the above are realized. Specifically, according to an embodiment of the present invention, the process described above with reference to the flowchart can be implemented as a computer software program. For example, an embodiment of the present invention includes a computer program product, which includes a computer program carried on a computer-readable medium, and the computer program includes program code for performing the method shown in the flowchart. In such an embodiment, the computer program can be downloaded and installed through a computer device, and when executed, performs the above functions defined in the method of the embodiment of the present invention. The computer device in the invention can be a notebook, a desktop, a workstation, an industrial computer, a server, and the like.

It can be understood that the above embodiment only expresses the exemplary embodiment of the present invention, and its description is more specific and detailed, but it cannot be understood as limiting the patent scope of the present invention. It should be pointed out that for ordinary technicians in this field, the above technical features can be freely combined without departing from the concept of the present invention, and several modifications and improvements can be made, which are all within the scope of protection of the present invention; therefore, all equivalent transformations and modifications made with the scope of the claims of the present invention should belong to the scope of the claims of the present invention.

## Claims

1. An ultrasonic testing method for a restricted structure, comprising the following steps:
receiving an ultrasonic control signal, and determining a waveform of a first ultrasonic wave, wherein the waveform of the first ultrasonic wave comprises a diverging wave or a converging wave;
transmitting a first ultrasonic wave with a corresponding waveform to a target imaging area of a restricted structure according to the ultrasonic control signal;
receiving an echo of the first ultrasonic wave to obtain echo data of the first ultrasonic wave;
obtaining an ultrasonic image of the target imaging area according to the echo data of the first ultrasonic wave, and detecting the defects of the restricted structure according to the ultrasonic image.

2. The ultrasonic testing method for a restricted structure according to claim 1, wherein,
transmitting the first ultrasonic wave and receiving the echo of the first ultrasonic wave through the same probe, wherein the probe has M array elements, and M is an integer greater than 0; or,
transmitting the first ultrasonic wave through a first probe and receiving the echo of the first ultrasonic wave through a second probe, wherein both the first probe and the second probe have M array elements.

3. The ultrasonic testing method for a restricted structure according to claim 2, wherein,
the M array elements are arranged in a uniform array element arrangement or a non-uniform array element arrangement.

4. The ultrasonic testing method for a restricted structure according to claim 2, wherein the array element is a transmitting array element when the first ultrasonic wave is transmitted, and the first ultrasonic wave comprises N first sub-ultrasonic waves, where N is an integer and 0 <N≤M;
after the step of receiving the ultrasonic control signal, it further comprises:
determining the number N of the first sub-ultrasonic waves in the first ultrasonic wave according to the ultrasonic control signal;
the step of transmitting the first ultrasonic wave with a corresponding waveform to the target imaging area of a restricted structure according to the ultrasonic control signal comprises:
transmitting the N first sub-ultrasonic waves by exciting N transmitting array elements.

5. The ultrasonic testing method for a restricted structure according to claim 4, wherein, after the step of receiving the ultrasonic control signal, it further comprises:
determining a transmitting delay law according to the ultrasonic control signal;
the step of transmitting the N first sub-ultrasonic waves by exciting N transmitting array elements comprises:
exciting N transmitting array elements according to the transmitting delay law to transmit the N first sub-ultrasonic waves.

6. The ultrasonic testing method for a restricted structure according to claim 4, wherein when the echo of the first ultrasonic wave is received, the array element is a receiving array element, and the echo of the first ultrasonic wave comprises N echoes of the first sub-ultrasonic waves;
the step of receiving the echo of the first ultrasonic wave to obtain the echo data of the first ultrasonic wave comprises:
receiving the echo of each of the first sub-ultrasonic waves through N receiving array elements to obtain the echo data of N×N first sub-ultrasonic waves;
superimposing the echo data of the N×N first sub-ultrasonic waves to obtain the echo data of the first ultrasonic wave.

7. The ultrasonic testing method for a restricted structure according to claim 1, wherein,
the step of receiving the ultrasonic control signal further comprises:
receiving an ultrasonic control signal and determining waveforms of a plurality of first ultrasonic waves; wherein the number of the first ultrasonic waves conform to a preset first threshold, or the angular steps of the deflection angles of all the first ultrasonic waves conform to a preset second threshold;
the step of transmitting the first ultrasonic wave with a corresponding waveform to the target imaging area of a restricted structure according to the ultrasonic control signal comprises:
transmitting a plurality of the first ultrasonic waves with corresponding waveforms to the target imaging area;
the step of obtaining an ultrasonic image of the target imaging area according to the echo data of the first ultrasonic wave comprises:
compounding echo data of all the first ultrasonic waves to obtain an ultrasonic image of the target imaging area; or,
when the number of the first ultrasonic waves is one, the step of obtaining the ultrasonic image of the target imaging area according to the echo data of the first ultrasonic waves comprises:
according to the echo data of the first ultrasonic wave, an ultrasonic image of the first ultrasonic wave is obtained as the ultrasonic image of the target imaging area.

8. The ultrasonic testing method for a restricted structure according to claim 1, wherein the waveform of the first ultrasonic wave further comprises a plane wave; or, the echo waveform of the first ultrasonic wave is a converging wave, a plane wave, or a diverging wave.

9. The ultrasonic testing method for a restricted structure according to claim 1, wherein the step of detecting the defects of the restricted structure according to the ultrasonic image comprises:
analyzing the ultrasonic image of the target imaging area by adopting a time domain analysis method and/or a frequency domain analysis method to detect the defects of the restricted structure.

10. An ultrasonic testing system for a restricted structure, comprising:
a control signal acquisition module, which is used to receive an ultrasonic control signal and determine a waveform of a first ultrasonic wave, wherein the waveform of the first ultrasonic wave comprises a diverging wave or a converging wave;
a transmitting module, which is used to transmit a first ultrasonic wave with a corresponding waveform to a target imaging area of a restricted structure according to the ultrasonic control signal;
a receiving module, which is used to receive an echo of the first ultrasonic wave and obtain echo data of the first ultrasonic wave;
an imaging processing module, which is used to obtain an ultrasonic image of the target imaging area according to the echo data of the first ultrasonic wave, to detect the defects of the restricted structure according to the ultrasonic image.
